# EUROPEAN PATENT SPECIFICATION

(11) **EP 2 453 144 B1**
(45) Date of publication and mention of the grant of the patent: **02.03.2016**
(21) Application number: 10796879.4
(22) Date of filing: 29.06.2010
(51) Int. Cl.: F16C 17/06, F01D 25/16, F02C 7/06, F16C 23/04, F16C 33/10

(54) **BEARING DEVICE, BEARING UNIT, AND ROTARY MACHINE**
LAGERVORRICHTUNG, LAGEREINHEIT UND ROTATIONSMACHINE
DISPOSITIF DE PALIER, UNITÉ DE PALIER ET MACHINE ROTATIVE

(30) Priority: 06.07.2009 JP 2009159852
(43) Date of publication of application: 16.05.2012
(73) Proprietor: Mitsubishi Heavy Industries, Ltd., Tokyo 108-8215 (JP)
(72) Inventor: KAIKOGI, Takaaki, Tokyo 108-8215 (JP); NAKANO, Takashi, Tokyo 108-8215 (JP); WAKI, Yuichiro, Tokyo 108-8215 (JP)
(74) Representative: Intès, Didier Gérard André
(86) International application number: PCT/JP2010/004283
(87) International publication number: WO 2011/004565

(56) References cited:
- EP-A2- 1 104 854
- DE-A1- 2 209 994
- JP-C- 120 086
- JP-U- 53 066 565
- JP-U- 60 028 627
- US-A- 1 403 914
- US-A- 2 037 326
- US-A- 2 168 345
- US-A- 5 795 078

## Description

### Technical Field

The present invention relates to a bearing device, a bearing unit, and a rotary machine.

The present application claims the right of priority to Japanese Patent Application No. 2009-159852 filed on July 6, 2009, in Japan, with the content cited herewith.

### Background Art

Conventionally, bearing devices such as a thrust bearing and a journal bearing are placed at various sites for supporting a rotating shaft (rotary shaft) of a large rotary machine such as a steam turbine, a gas turbine and a compression machine.

In recent years, in order to attain high output power from a turbine, a rotor blade (moving blade) disposed on a turbine rotor is made long (large in diameter of the rotor) and the number of blades has increased. Accordingly, a rotating shaft is increased in length and weight. Thus, a turbine rotor is increased in weight and the rotating shaft is increased in length, thus resulting in possible deformation of the rotating shaft.

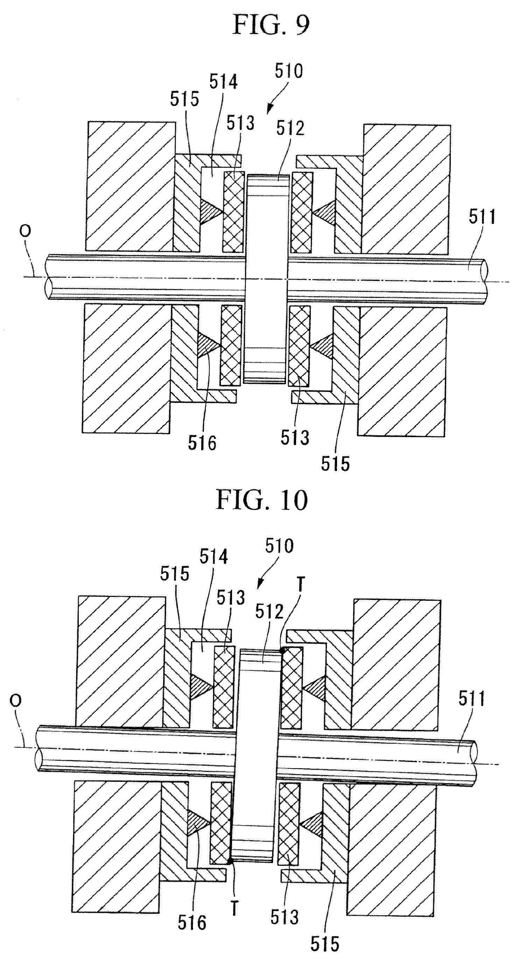

Here, Fig. 9 shows a configuration of a conventional thrust bearing. As shown in Fig. 9, a thrust bearing 510 is provided with multiple bearing pads 513 for supporting a thrust collar 512 formed on a rotating shaft 511 and carrier rings 515, each of which has a housing part 514 for housing the bearing pads 513. Among the multiple bearing pads 513, some of the bearing pads are placed so as to face one edge surface of the thrust collar 512, while the remaining bearing pads are placed so as to face the other edge surface of the thrust collar 512. Each of the bearing pads 513 is substantially in the shape of a fan when viewed from the axial direction of the rotating shaft 511. Further, a pivot 516 is installed between each of the bearing pads 513 and the carrier ring 515, and where the rotating shaft 511 undergoes deformation or the like, the bearing pads 513 are able to follow up an inclination of the thrust collar 512 (for example, refer to Patent Document 1). It is noted that oil can be supplied to the housing part 514.

US 2,037,326 discloses a bearing device comprising the features of the preamble of claim 1.

### Prior Art Document

### Patent Document

Patent Document 1: Japanese Published Unexamined Patent Application No. 2002-310142

### Summary of the Invention

### Problems to be Solved by the Invention

Moreover, in the conventional thrust bearing 510, as shown in Fig. 10, when the rotating shaft 511 is increased in deformation (inclination), the bearing pads 513 are unable to follow up the inclination of the thrust collar 512. Thus, there is a possibility that no uniform clearance may be provided between the thrust collar 512 and the bearing pads 513. Further, when the rotating shaft 511 is rotated in a state in which the rotating shaft 511 is greatly deformed and greatly inclined in association with an increase in weight of the turbine rotor, there is a possibility that the thrust collar 512 may be excessively pressed to the bearing pads 513. Therefore, the above-configured turbine has been limited in the amount of output power it could attain.

Further, in general, a turbine rotor is provided with multiple turbine moving blades along the axial direction and configured in such a manner that a turbine stationary blade formed on a turbine casing or the like, is placed between adjacent turbine moving blades. Therefore, where the shaft center O of the rotating shaft is inclined by deformation or the like, of a rotating shaft, the center of gravity of the thrust collar 512 is deviated axially in the thrust bearing 510 as shown in Fig. 9. Thereby, there is a possibility that the function as a bearing may be insufficient.

The present invention is made in view of the above situation, and an object of the present invention is to provide a bearing device, a bearing unit and a rotary machine capable of providing the function as a bearing even when a rotating shaft is inclined.

### Means for Solving the Problem

In order to solve the above problem, a bearing device of the present invention is defined by claim 1. Such a bearing device is provided with bearing pads placed around a rotating shaft to support a thrust collar and carrier rings, each of which houses the bearing pads and is supported by a casing. A supported surface which is supported by the casing on the carrier ring is a curved surface which is raised at least along one direction orthogonal to the rotating shaft at a substantially constant curvature around the center of gravity of the thrust collar.

The bearing device of the present invention is able to prevent the thrust collar from deviating from the center of gravity thereof due to the fact that the carrier ring moves rotationally around the center of gravity of the thrust collar when the shaft center of the rotating shaft is inclined by deformation or the like, of the rotating shaft. Therefore, even when the turbine rotor is increased in diameter and shaft length to deform the rotating shaft, thereby resulting in an inclination of the rotating shaft the carrier ring is able to follow the inclination, and the bearing device is able to function as a bearing.

Further, since the thrust collar will not deviate from the center of gravity, a turbine is able to fully exhibit the performance. Therefore, it is possible to attain high output power of the turbine.

In the bearing device of the present invention, it is preferable that the carrier ring can be divided into a first member having a housing part for housing the bearing pads and a second member having the supported surface.

In the bearing device of the present invention, the carrier ring is improved in manufacturing, assembling and maintenance properties. As described above, since the carrier ring can be divided into the first member and the second member, it is possible to manufacture the respective members separately without using large processing equipment. Further, since the carrier ring can be divided into a plurality of members, these members can be easily transported and assembled and can also be exchanged individually.

A first mode of the bearing unit of the present invention is a bearing unit which is provided with the bearing device of the above-described present invention and a casing having a supporting surface for supporting the supported surface. Also, lubricating oil can be supplied between the supported surface of the carrier ring and the supporting surface of the casing.

In the first mode of the bearing unit of the present invention, it is possible to decrease the frictional coefficient between the supported surface of the carrier ring and the supporting surface of the casing. Therefore, the carrier ring (bearing device) can be improved in follow-up performance when the rotating shaft is inclined.

In the first mode of the bearing unit of the present invention, it is preferable that the lubricating oil can be supplied by branching from a lubricating-oil supplying mechanism for supplying the lubricating oil to the bearing pads.

In the first mode of the bearing unit of the present invention, the existing lubricating-oil supplying mechanism can be commonly used to simplify a lubricating-oil supplying system.

In the first mode of the bearing unit of the present invention, it is preferable that the bearing unit is further provided with a high-pressure pump capable of supplying high-pressure lubricating oil between the supported surface of the carrier ring and the supporting surface of the casing and that an oil groove through which the high-pressure lubricating oil can flow is formed on the supported surface.

In the first mode of the bearing unit of the present invention, the supported surface of the carrier ring is allowed to float more effectively against the supporting surface of the casing due to static pressure. Therefore, a frictional coefficient between the supported surface of the carrier ring and the supporting surface of the casing is further decreased to further improve the follow-up performance of the carrier ring when the rotating shaft (thrust collar) is inclined.

In the first mode of the bearing unit of the present invention, it is preferable that the supported surface is formed in the shape of a spherical surface and the oil groove is formed along the circumferential direction so as to be substantially equal in distance from the center of the rotating shaft.

In the first mode of the bearing unit of the present invention, the high-pressure lubricating oil is supplied substantially uniformly along the circumferential direction of the supported surface. Therefore, oil pressure can be made substantially uniform as a whole and the carrier ring is allowed to float against the casing in a well-balanced manner.

A second mode of the bearing unit of the present invention is provided with the bearing device of the above-described present invention, a casing having a supporting surface for supporting the supported surface, and a ball bearing disposed between the supported surface of the carrier ring and the supporting surface of the casing.

In the second mode of the bearing unit of the present invention, rolling contact can be attained between the supported surface of the carrier ring and the supporting surface of the casing, thus making it possible to decrease a frictional coefficient between the supported surface and the supporting surface. Therefore, the carrier ring (bearing device) can be improved in follow-up performance when the rotating shaft is inclined.

Further, a rotary machine of the present invention is provided with the bearing unit of the above-described present invention, a rotating shaft placed at the shaft center of the bearing unit, and a thrust collar which is formed so as to protrude outward in the radial direction on the rotating shaft, thereby restricting movement in an axial direction of the rotating shaft.

In the rotary machine of the present invention, the thrust collar can be prevented from deviating from the center of gravity thereof due to the fact that the carrier ring moves rotationally around the center of gravity of the thrust collar even when the rotating shaft is deformed or the like, and the shaft center of the rotating shaft is inclined. Therefore, when a turbine rotor is increased in diameter and shaft length to deform the rotating shaft, resulting in inclination of the rotating shaft, the carrier ring is able to follow up the inclination and exhibit the function as a bearing.

### Effect of the Invention

According to the present invention, even when the rotating shaft is deformed or the like, and the shaft center of the rotating shaft is inclined, the carrier ring moves rotationally around the center of gravity of the thrust collar. Thus, it is possible to prevent the thrust collar from deviating from the center of gravity. Therefore, when the turbine rotor is increased in diameter and shaft length to deform the rotating shaft, resulting in inclination of the rotating shaft, the carrier ring is able to follow up the inclination and exhibit the function as a bearing.

### Brief Description of the Drawings

Fig. 1 is a schematic view which shows a steam turbine of a first embodiment of the present invention.
Fig. 2 is a cross sectional view of a thrust bearing device of the first embodiment of the present invention.
Fig. 3 is a cross sectional view taken along the line of A to A in Fig. 2.
Fig. 4 is a cross sectional view of a thrust bearing device of a second embodiment of the present invention.
Fig. 5 is a cross sectional view of a thrust bearing device of a third embodiment of the present invention.
Fig. 6 is a cross sectional view of a thrust bearing device of a fourth embodiment of the present invention.
Fig. 7 is a front elevational view of a carrier ring of the fourth embodiment of the present invention when viewed in the axial direction.
Fig. 8 is a cross sectional view of a thrust bearing device of a fifth embodiment of the present invention.
Fig. 9 is a cross sectional view of a conventional thrust bearing device.
Fig. 10 is a cross sectional view which shows a state that a rotating shaft of the conventional thrust bearing device is inclined.

### Modes for Carrying Out the Invention

### (First Embodiment)

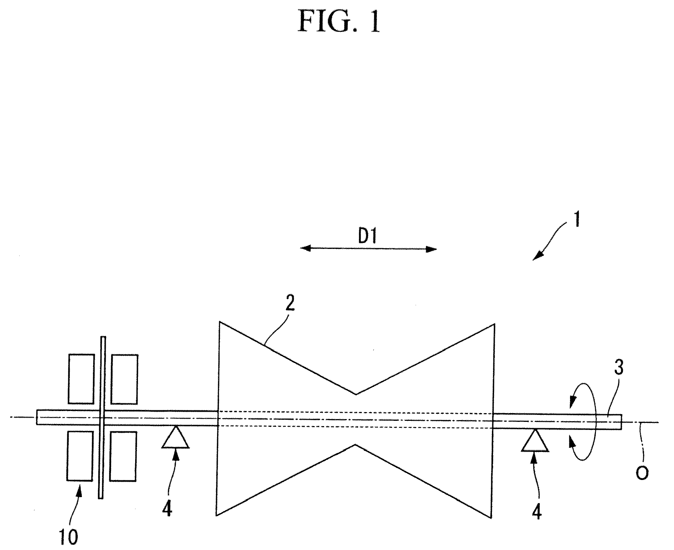

Next, a description will be given of the steam turbine (rotary machine) of the first embodiment of the present invention with reference to Fig. 1 to Fig. 3.

As shown in Fig. 1, a steam turbine 1 is provided with a turbine rotor 2 on which steam acts, a rotating shaft 3 disposed so as to penetrate through the shaft center of the turbine rotor 2, journal bearing devices 4, each of which supports the rotating shaft 3 in the radial direction so as to rotate freely, and a thrust bearing device 10 for supporting the rotating shaft 3 in an axial direction D1 so as to rotate freely. The shaft center of the rotating shaft 3 is given as an axial line O.

The turbine rotor 2 is housed in a turbine casing (not shown), and multiple turbine moving blades (not shown) are disposed in a protruding manner on an outer circumferential surface of the rotating shaft 3 of the turbine rotor 2 outward in the radial direction, with spacing kept along the axial direction D1. Multiple turbine stationary blades (not shown) are disposed toward the rotating shaft 3 so as to be placed alternately with the turbine moving blades in the axial direction D1 from the turbine casing.

Each of the journal bearing devices 4 is disposed outside on the both ends of the turbine rotor 2 on the rotating shaft 3 in the axial direction. Further, the thrust bearing device 10 is disposed in the vicinity of one of the journal bearing devices 4.

According to the thus configured steam turbine 1, steam introduced into the turbine casing via a steam pipe (not shown) from a steam source (not shown) flows between the turbine moving blades of the turbine rotor 2 and the turbine stationary blades in the axial direction D1. Thereby, the rotating shaft 3 is rotated and driven at the center of the axial line O and able to output rotary power.

Next, a description will be given of the thrust bearing device 10 disposed on the steam turbine 1.

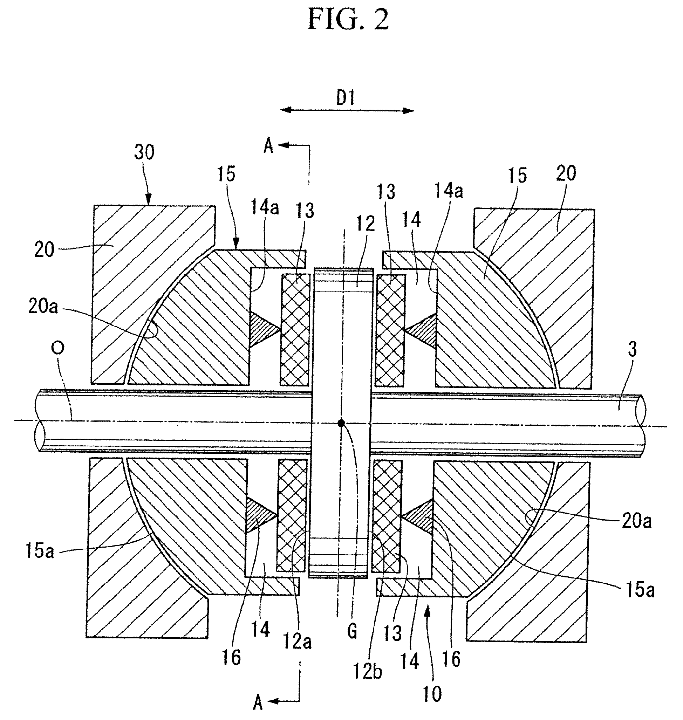

As shown in Fig. 2, the rotating shaft 3 is inserted into the thrust bearing device 10. And, the thrust bearing device 10 is provided with multiple bearing pads 13, each of which is formed substantially in the shape of a fan when viewed from the front and placed so as to oppose both edge surfaces 12a, 12b in the axial direction of the thrust collar 12 formed on the rotating shaft 3, and also provided with two carrier rings 15, each of which has a housing part 14 for housing the bearing pads 13. Further, a pivot 16 is disposed between each of the bearing pads 13 and the carrier rings 15. Where the rotating shaft 3 is deformed to some extent, the bearing pads 13 are able to follow up an inclination of the thrust collar 12. That is, the edge surface 12a of the thrust collar 12 and the bearing pads 13 are placed substantially parallel to each other, with a certain distance therebetween. Lubricating oil is supplied between the edge surfaces 12a, 12b of the thrust collar 12 and the bearing pads 13.

In other words, the thrust bearing device 10 is provided with the multiple bearing pads (12 pads in the present embodiment) 13 for supporting the thrust collar 12 formed on the rotating shaft 3 and the carrier rings 15, each of which houses the bearing pads 13. Among the multiple bearing pads 13, half of the bearing pads 13 are placed so as to face the one edge surface 12a of the thrust collar 12, while the remaining half of the bearing pads 13 is placed so as to face the other edge surface 12b of the thrust collar 12. The number of bearing pads 13 is not limited to the number given in the present embodiment and may be set appropriately depending on the size of the embodiment.

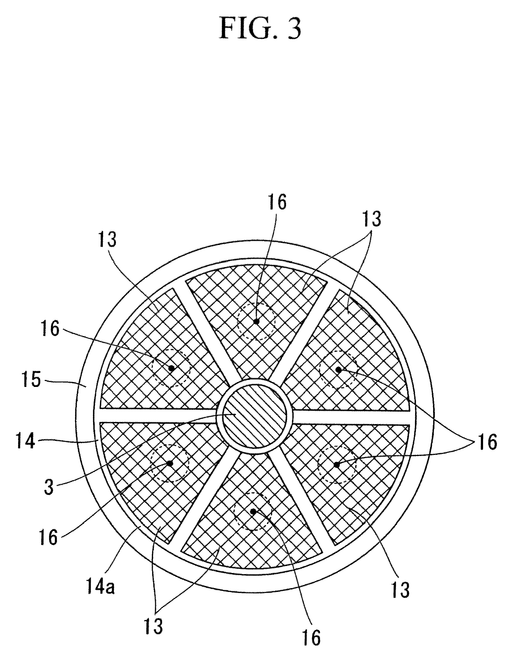

As shown in Fig. 2 and Fig. 3, the bearing pads 13 are placed inside the housing part 14 formed in the shape of an annular groove on one end of the carrier ring 15 in the axial direction. The multiple bearing pads 13 are placed along the circumferential direction of the rotating shaft 3 when viewed in the axial direction D1. Further, the bearing pads 13 are supported by the pivots 16 placed in the radial direction substantially at the center of a surface 14a of the housing part 14 facing the axial direction D1. That is, each of the bearing pads 13 is positioned to the carrier ring 15 via each of the pivots 16.

In other words, the housing part 14 is a recessed part formed on an edge surface of the carrier ring 15 facing the edge surface 12a (or 12b) of the thrust collar 12. Each of the bearing pads 13 is formed substantially in the shape of a fan when viewed in the axial direction of the rotating shaft 3. In the present embodiment, six bearing pads 13 are placed around the rotating shaft 3 inside the housing part 14. The bearing pads 13 are supported by the pivots 16 placed on a bottom surface 14a of the housing part 14 so as to be positioned substantially equal in distance from the rotating shaft 3 and also from an inner circumferential surface of the housing part 14.

The interior of the housing part 14 acts as an oil tank into which lubricating oil is filled. In a state in which the lubricating oil is filled into the oil tank, each of the bearing pads 13 supports the thrust collar 12 via the lubricating oil, by which the rotating shaft 3 can be supported in the axial direction D1 so as to rotate freely.

In the carrier ring 15, the one end side in the axial direction is provided with the housing part 14, while the other edge surface 15a side in the axial direction is formed in the shape of a spherical surface protruding outward in the axial direction with respect to the thrust collar 12. A casing 20 is disposed on the other edge surface 15a side of the carrier ring 15. One edge surface 20a of the casing 20 in the axial direction is formed in the shape of a recessed spherical surface so as to be substantially in contact with the other edge surface 15a of the carrier ring 15. That is, the other edge surface 15a of the carrier ring 15 is able to slide along the one edge surface 20a of the casing 20. Therefore, the one edge surface 20a of the casing 20 acts as a supporting surface, while the other edge surface 15a of the carrier ring 15 acts as a supported surface. In addition, the thrust bearing device 10 and the casing 20 is configured as a bearing unit 30. Further, the carrier ring 15 is formed with SC (casting steel) or SF (forging steel) or the like, for example.

In other words, the surface 15a of the carrier ring 15 facing an axial end of the rotating shaft 3 is formed in the shape of a spherical surface protruding outward in the axial direction of the rotating shaft 3. The casing 20 is disposed outside the carrier ring 15. The surface 20a facing the carrier ring 15 of the casing 20 is formed in the shape of a recessed surface corresponding to the spherical surface 15a of the carrier ring 15. That is, the surface 20a of the casing 20 acting as the supporting surface is substantially in contact with the surface 15a of the carrier ring 15 acting as the supported surface.

Here, the other edge surface 15a of the carrier ring 15 and the one edge surface 20a of the casing 20 are formed in the shape of a spherical surface having a substantially constant radius of curvature around the center of gravity G of the thrust collar 12. That is, each of the edge surfaces 15a of the carrier ring 15 placed on both sides of the thrust collar 12 is formed in the shape of a raised curved surface having a substantially constant radius of curvature around the center of gravity G of the thrust collar 12. Each of the edge surfaces 20a of the casing 20 placed outside the carrier rings 15, 15 is formed in the shape of a recessed curved surface having a substantially constant radius of curvature around the center of gravity G of the thrust collar 12. The other edge surface 15a of the carrier ring 15 is able to slide along the one edge surface 20a of the casing 20 around the center of gravity G of the thrust collar 12.

According to the present embodiment, in association with the steam turbine 1 which is increased in output power and size, the turbine rotor 2 is accordingly increased in shaft length and diameter. Therefore, even when the rotating shaft 3 is deformed or the like, and the axial line O of the rotating shaft 3 is inclined, the carrier rings 15 move rotationally around the center of gravity G of the thrust collar 12, thus making it possible to prevent the thrust collar 12 from deviating from the center of gravity G thereof. Therefore, even when the axial line O of the rotating shaft 3 is inclined, the carrier rings 15 are able to follow up the inclination. Thereby, it is possible to prevent contact of the thrust collar 12 with the bearing pads 13, that is, an excessively pressed state. Therefore, the thrust bearing device 10 is able to function as a bearing, even when the axial line O of the rotating shaft 3 is inclined. It is also possible to increase the product life cycle of the thrust bearing device 10.

Further, in the steam turbine 1, since the thrust collar 12 is free of any deviation from the center of gravity G thereof, the steam turbine 1 is able to fully exhibit the performance despite deformation or the like, of the rotating shaft 3. Therefore, steam turbine 1 can be increased in output power.

### (Second embodiment)

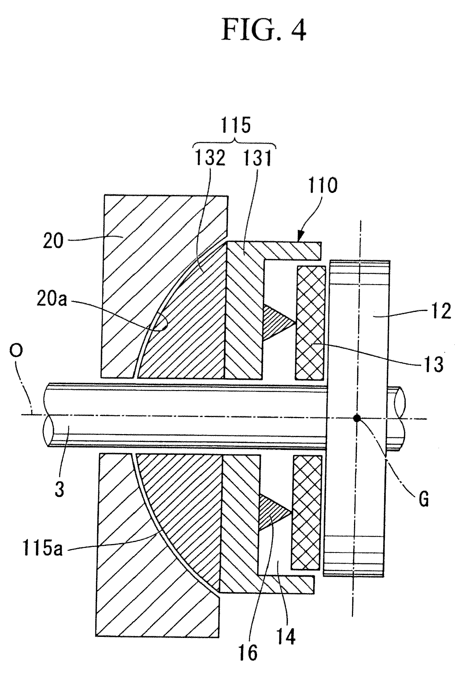

Next, a description will be given of a steam turbine (rotary machine) of the second embodiment of the present invention with reference to Fig. 4. The present embodiment is different from the first embodiment only in the configuration of the carrier ring and is substantially similar in other configurations. Thus, the same parts will be given the same reference numerals, and detailed descriptions thereof will be omitted here. Further, the thrust bearing device is disposed with bearing devices substantially similar in configuration on both end sides of the thrust collar in the axial direction. However, only one of the bearing devices is shown in the drawings of the second embodiment to the fifth embodiment.

As shown in Fig. 4, regarding a thrust bearing device 110, a carrier ring 115 can be divided into a first member 131 having a housing part 14 for housing bearing pads 13 and a second member 132 having the other edge surface 115a which is formed in the shape of a spherical surface on the carrier ring 115. In addition, the first member 131 and the second member 132 are coupled, for example, by joining with bolts or forming a fitting structure. Further, the material of the first member 131 and the second member 132 are formed with SC (casting steel) or SF (forging steel) or the like, for example, and the first member 131 and the second member 132 are made with the same material. However, they may be configured with different materials depending on characteristics of the materials and factors such as manufacturing costs.

According to the present embodiment, the same working effect as the first embodiment can be obtained and the carrier ring 115 can be improved in manufacturing, assembling and maintenance properties. For example, the carrier ring 115 is divided into the first member 131 and the second member 132, by which the respective members can be easily processed without using large processing equipment. These members can be made smaller than a case where the members are configured in an integral manner, and they can be transported, installed and assembled easily. Further, during maintenance, only one of the first member 131 and the second member 132 can be replaced.

### (Third embodiment)

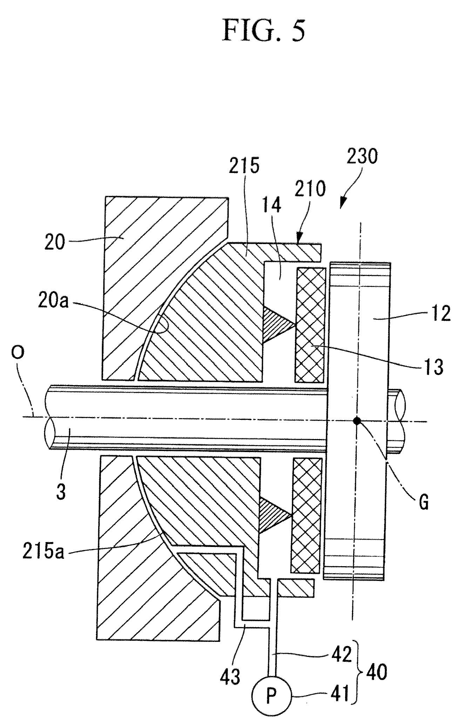

Next, a description will be given of a steam turbine (rotary machine) of the third embodiment of the present invention with reference to Fig. 5. The present embodiment is different from the first embodiment only in the configuration of the bearing unit and is substantially similar in other configurations. Thus, the same parts will be given the same reference numerals, and detailed descriptions thereof will be omitted here.

As shown in Fig. 5, a bearing unit 230 is provided with a thrust bearing device 210 and a casing 20 having a supporting surface 20a for supporting a supported surface 215a of a carrier ring 215. Here, lubricating oil can be supplied between the supported surface 215a of the carrier ring 215 and the supporting surface 20a of the casing 20. In addition, the lubricating oil can be supplied, for example, at a pressure of 0.1 MPa.

More specifically, a lubricating oil supplying mechanism 40 which has an oil pump 41 for supplying lubricating oil into a housing part 14 of the carrier ring 215 and an oil pipe 42 for coupling the oil pump 41 to the housing part 14 is disposed. Further, in the present embodiment, the oil pipe 42 is branched midway and a branched oil pipe 43 is opened on the supported surface 215a of the carrier ring 215 by penetrating through the carrier ring 215. That is, the lubricating oil can be supplied between the supported surface 215a of the carrier ring 215 and the supporting surface 20a of the casing 20.

According to the present embodiment, the same working effect as the first embodiment can be obtained. Further, the lubricating oil can be supplied between the supported surface 215a of the carrier ring 215 and the supporting surface 20a of the casing 20, thus making it possible to decrease a frictional coefficient between the supported surface 215a and the supporting surface 20a. Therefore, where the rotating shaft 3 is deformed and the axial line O of the rotating shaft 3 is inclined, the carrier ring 215 is allowed to move rotationally smoothly with respect to the casing 20. That is, the carrier ring 215 can be improved in terms of follow-up performance.

Further, the present embodiment is configured in such a manner that the oil pipe is branched from the lubricating oil supplying mechanism 40 for supplying the lubricating oil to the housing part 14 which houses the bearing pads 13, thereby supplying the lubricating oil between the supported surface 215a of the carrier ring 215 and the supporting surface 20a of the casing 20. Therefore, the lubricating oil supplying mechanism 40 can be used commonly to simplify a system of supplying the lubricating oil.

### (Fourth embodiment)

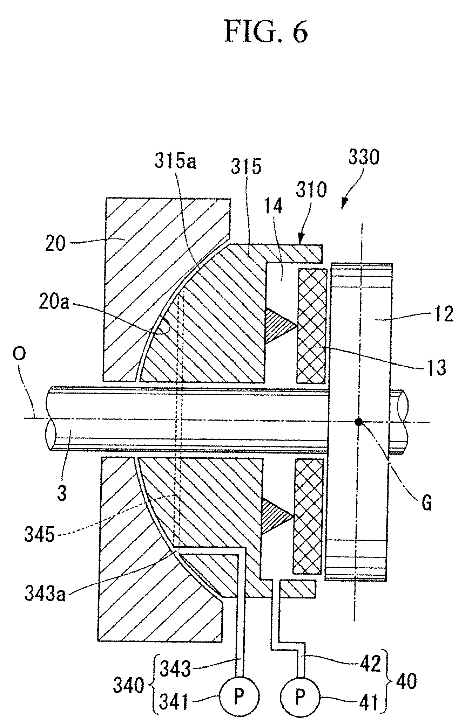

Next, a description will be given of a steam turbine (rotary machine) of the fourth embodiment of the present invention with reference to Fig. 6 to Fig. 7. The present embodiment is different from the first embodiment only in the configuration of the bearing unit and is substantially similar in other configurations. Thus, the same parts will be given the same reference numerals, and detailed descriptions thereof will be omitted here.

As shown in Fig. 6, a bearing unit 330 is provided with a thrust bearing device 310 and a casing 20 having a supporting surface 20a for supporting a supported surface 315a of a carrier ring 315. Here, high-pressure lubricating oil can be supplied between the supported surface 315a of the carrier ring 315 and the supporting surface 20a of the casing 20. In addition, the high-pressure lubricating oil can be supplied, for example, at a pressure of 1 MPa.

More specifically, a high-pressure lubricating oil supplying mechanism 340 which has a high-pressure oil pump 341 for supplying the high-pressure lubricating oil between the supported surface 315a of the carrier ring 315 and the supporting surface 20a of the casing 20 and an oil pipe 343 for coupling the high-pressure oil pump 341 to the carrier ring 315 is disposed. In addition, the high-pressure lubricating oil supplying mechanism 340 is disposed separately from the lubricating oil supplying mechanism 40 of the third embodiment. Further, the oil pipe 343 is opened on the supported surface 315a of the carrier ring 315 by penetrating through the carrier ring 315.

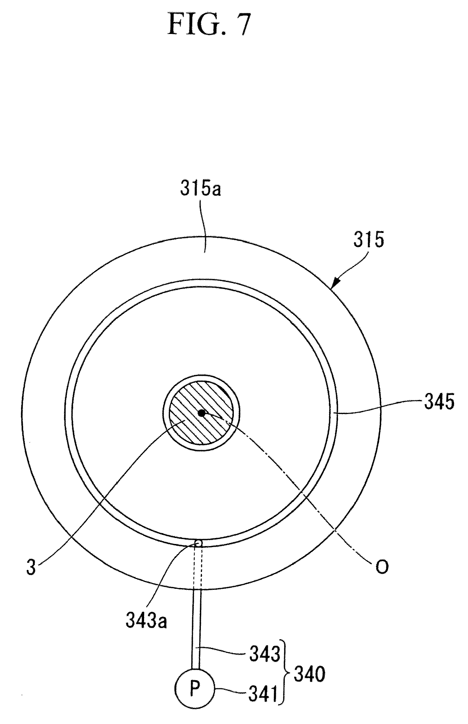

Further, as shown in Fig. 7, an oil groove 345 is formed on the supported surface 315a of the carrier ring 315 in the circumferential direction so as to be substantially equal in distance from the axial line O of the rotating shaft 3. Also, an opening part 343a of the oil pipe 343 is formed inside the oil groove 345. That is, the high-pressure lubricating oil can be supplied substantially at a uniform pressure between the supported surface 315a of the carrier ring 315 and the supporting surface 20a of the casing 20.

According to the present embodiment, the same working effect as the first embodiment can be obtained. Further, the high-pressure lubricating oil is supplied between the supported surface 315a of the carrier ring 315 and the supporting surface 20a of the casing 20, by which the supported surface 315a of the carrier ring 315 is allowed to float more effectively by static pressure effects against the supporting surface 20a of the casing 20. Therefore, it is possible to further decrease a frictional coefficient between the supported surface 315a of the carrier ring 315 and the supporting surface 20a of the casing 20 and also to improve the follow-up performance of the carrier ring 315 when the rotating shaft 3 is inclined.

Further, since the oil groove 345 is formed on the supported surface 315a of the carrier ring 315, the high-pressure lubricating oil can be supplied substantially uniformly along the circumferential direction of the supported surface 315a to attain a substantially uniform oil pressure as a whole. Also, the carrier ring 315 is allowed to float against the casing 20 in a well-balanced manner.

### (Fifth embodiment)

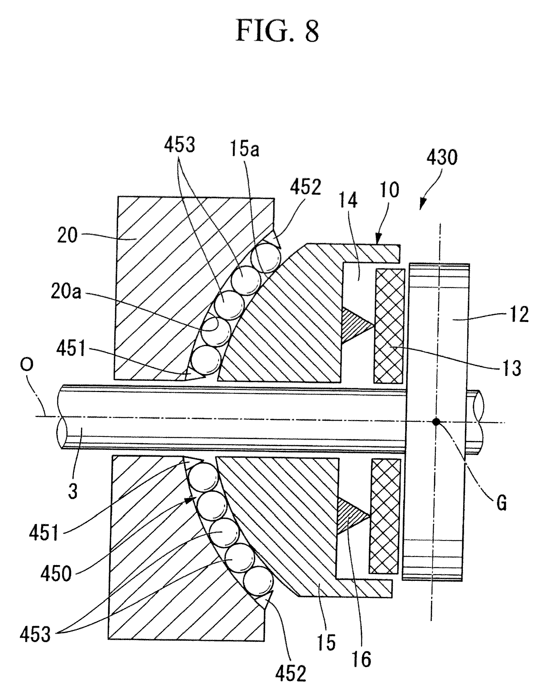

Next, a description will be given of a steam turbine (rotary machine) of the fifth embodiment of the present invention with reference to Fig. 8. The present embodiment is different from the first embodiment only in the configuration of the bearing unit and is substantially similar in other configurations. Thus, the same parts will be given the same reference numerals, and detailed descriptions thereof will be omitted here.

As shown in Fig. 8, a bearing unit 430 is provided with a thrust bearing device 10 and a casing 20 having a supporting surface 20a for supporting a supported surface 15a of a carrier ring 15. Here, a ball bearing 450 is disposed between the supported surface 15a of the carrier ring 15 and the supporting surface 20a of the casing 20. The ball bearing 450 is provided with retainers 451, 452 placed along the circumferential direction respectively at an inner end and an outer end of the supporting surface 20a of the casing 20 in the radial direction and multiple spherical bodies 453 placed so as to roll between the retainers 451, 452. That is, where the axial line O of the rotating shaft 3 is inclined, the carrier ring 15 is able to move rotationally with respect to the casing 20 via the ball bearing 450.

According to the present embodiment, rolling contact can be attained between the supported surface 15a of the carrier ring 15 and the supporting surface 20a of the casing 20 to decrease the frictional coefficient between the supported surface 15a and the supporting surface 20a. Therefore, the carrier ring 15 can be improved in follow-up performance when the axial line O of the rotating shaft 3 is inclined.

The present invention shall not be limited to the above-described embodiments but includes various modifications of the above-described embodiments without departing from the scope of the present invention. That is, specific structures and configurations described in the embodiments are merely examples and can be modified whenever necessary.

Further, in the present embodiment, a description has been made for a case where a steam turbine is used as a rotary machine. The present invention shall not be limited to the steam turbine but can be adopted for a thrust bearing device used in a gas turbine and a compression machine.

### Industrial Applicability

The present invention relates to a bearing device, a bearing unit and a rotary machine. According to the bearing device, the bearing unit and the rotary machine of the present invention, even when the rotating shaft is deformed and inclined, it is possible to exhibit the function as a bearing.

### Description of Reference Numerals

1: Steam turbine (Rotary machine)
3: Rotating shaft
10, 110, 210, 310: Thrust bearing device (Bearing device)
12: Thrust collar
13: Bearing pad
14: Housing part
15, 115, 215, 315: Carrier ring
15a, 115a, 215a, 315a: Supported surface
20: Casing
20a: Supporting surface
30, 230, 330, 430: Bearing unit
40: Lubricating oil supplying mechanism
131: First member
132: Second member
341: High-pressure pump
345: Oil groove
450: Ball bearing
G: Center of gravity
O: Axial line (Shaft center)

## Claims

1. A bearing device, comprising:
bearing pads (13) placeable around a rotating shaft (3) to support a thrust collar (12) and
carrier rings (15,115,215,315), each of which houses the bearing pads (13) and is supportable by a casing (20),
wherein
a supported surface (15a,115a,215a,315a) on each carrier ring (15, 115, 215, 315) which is supportable by the casing (20) is a curved surface which is raised at least along one direction orthogonal to the rotating shaft (3), said curved surface being formed in the shape of a spherical surface having a substantially constant radius of curvature around the center of gravity of the thrust collar (12),
the carrier rings (15, 115, 215, 315) housing the bearing pads inside housing parts (14) thereof, **characterised in that** the interior of each housing part (14) acts as an oil tank into which lubricating oil is filled.

2. The bearing device according to claim 1, wherein the carrier ring (115) can be divided into a first member (131) having the housing part (14) for housing the bearing pads (13) and a second member (132) having the supported surface (115a).

3. A bearing unit, comprising:
the bearing device (10) according to claim 1 or claim 2; and
a casing (20) having a supporting surface (20a) for supporting the supported surface (15a,115a,215a,315a); wherein
lubricating oil is supplied between the supported surface (15a,115a,215a,315a)of the carrier ring (15) and the supporting surface (20a) of the casing (20).

4. The bearing unit according to claim 3, wherein
the lubricating oil is supplied by branching from a lubricating oil supplying mechanism (40) for supplying the lubricating oil to the bearing pads (13).

5. The bearing unit according to claim 3 which is provided with a high-pressure pump (341) capable of supplying high-pressure lubricating oil between the supported surface (315a) of the carrier ring (315) and the supporting surface (20a) of the casing (20), wherein
an oil groove (345) through which the high-pressure lubricating oil can flow is formed on the supported surface (315a).

6. The bearing unit according to claim 5, wherein
the supported surface (315a) is formed in the shape of a spherical surface and
the oil groove (345) is formed along the circumferential direction so as to be substantially equal in distance from the center of the rotating shaft (3).

7. A bearing unit comprising:
the bearing device (10) according to claim 1 or claim 2;
a casing (20) having a supporting surface (20a) for supporting the supported surface (15a); and
a ball bearing (450) disposed between the supported surface (15a) of the carrier ring (15) and the supporting surface (20a) of the casing (20).

8. A rotary machine, comprising:
the bearing unit according to any one of claims 3 to 7;
a rotating shaft (3) placed at the shaft center of the bearing unit; and
a thrust collar (12) which is formed so as to protrude outward in the radial direction on the rotating shaft (3), thereby restricting movement in an axial direction of the rotating shaft (3).

## Patentansprüche

1. Lagervorrichtung, umfassend:
Lagersegmente (13), die um eine Drehwelle (3) angeordnet werden können, um einen Druckring (12) zu stützen, und
Trägerringe (15, 115, 215, 315), von denen jeder die Lagersegmente (13) aufnimmt und von einem Gehäuse (20) gestützt werden kann ,
wobei
eine gestützte Oberfläche (15a, 115a, 215a, 315a) auf jedem Trägerring (15, 115, 215, 315), der von dem Gehäuse (20) gestützt werden kann, eine gekrümmte Oberfläche ist, die mindestens entlang einer Richtung angehoben ist, die zu der Drehwelle (3) orthogonal ist, wobei die gekrümmte Oberfläche in Form einer sphärischen Oberfläche ausgebildet ist, die einen im Wesentlichen konstanten Krümmungsradius um das Gravitationszentrum des Druckrings (12) aufweist, und
die Trägerringe (15, 115, 215, 315) die Lagersegmente in Gehäuseteilen (14) davon aufnehmen, **dadurch gekennzeichnet, dass** der Innenraum jedes Gehäuseteils (14) als ein Ölbehälter fungiert, in dem Schmieröl eingefüllt ist.

2. Lagervorrichtung nach Anspruch 1, wobei
der Trägerring (115) in ein erstes Element (131), das das Gehäuseteil (14) zum Aufnehmen der Lagersegmente (13) aufweist, und ein zweites Element (132), das die gestützte Oberfläche (115a) aufweist, aufgeteilt werden kann.

3. Lagereinheit, umfassend:
die Lagervorrichtung (10) nach Anspruch 1 oder Anspruch 2, und
ein Gehäuse (20) mit einer Stützoberfläche (20a) zum Stützen der gestützten Oberfläche (15a, 115a, 215a, 315a), wobei
Schmieröl zwischen der gestützten Oberfläche (15a, 115a, 215a, 315a) des Trägerrings (15) und der Stützoberfläche (20a) des Gehäuses (20) zugeführt wird.

4. Lagereinheit nach Anspruch 3, wobei
das Schmieröl durch Abzweigen von einem Schmieröl-Zuführmechanismus (40) zum Zuführen des Schmieröls zu den Lagersegmenten (13) zugeführt wird.

5. Lagereinheit nach Anspruch 3, die mit einer Hochdruckpumpe (341) versehen ist, die Hochdruckschmieröl zwischen der gestützten Oberfläche (315a) des Trägerrings (315) und der Stützoberfläche (20a) des Gehäuses (20) stützen kann, wobei
eine Ölrille (345), durch die das Hochdruckschmieröl fließen kann, auf der gestützten Oberfläche (315a) ausgebildet ist.

6. Lagereinheit nach Anspruch 5, wobei
die gestützte Oberfläche (315a) in Form einer sphärischen Oberfläche ausgebildet ist und die Rille (345) entlang der Umfangsrichtung ausgebildet ist, so dass sie im Wesentlichen den gleichen Abstand vom Zentrum der Drehwelle (3) aufweist.

7. Lagereinheit, umfassend:
die Lagervorrichtung (10) nach Anspruch 1 oder Anspruch 2,
ein Gehäuse (20), das eine Stützoberfläche (20a) zum Stützen der gestützten Oberfläche (15a) aufweist, und
ein Kugellager (450), das zwischen der gestützten Oberfläche (15a) des Trägerrings (15) und der Stützoberfläche (20a) des Gehäuses (20) zugeführt wird.

8. Rotationsmaschine, umfassend:
die Lagereinheit nach einem der Ansprüche 3 bis 7,
eine Drehwelle (3), die an dem Wellenzentrum der Lagereinheit angeordnet ist, und
einen Druckring (12), der derart ausgebildet ist, dass er nach außen in der radialen Richtung auf der Drehwelle (3) hervorsteht, sodass eine Bewegung in einer axialen Richtung der Drehwelle (3) eingeschränkt wird.

## Revendications

1. Dispositif de palier, comportant :
des patins de palier (13) pouvant être placés autour d'un arbre de rotation (3) pour supporter un collet de butée (12) et
des bagues de support (15, 115, 215, 315), dont chacune renferme les patins de palier (13) et peut être supportée par un boîtier (20),
dans lequel
une surface supportée (15a, 115a, 215a, 315a) sur chaque bague de support (15, 115, 215, 315) qui peut être supportée par le boîtier (20) est une surface courbe qui est relevée au moins le long d'une direction perpendiculaire à l'arbre de rotation (3), ladite surface courbe étant sous la forme d'une surface sphérique ayant un rayon de courbure sensiblement constant autour du centre de gravité du collet de butée (12),
les bagues de support (15, 115, 215, 315) logeant les patins de palier à l'intérieur de parties de logement (14) de celles-ci, **caractérisé en ce que** l'intérieur de chaque partie de logement (14) agit en tant que réservoir d'huile dans lequel de l'huile de lubrification est versée.

2. Dispositif de palier selon la revendication 1, dans lequel
la bague de support (115) peut être divisée en un premier élément (131) ayant la partie de logement (14) destinée à loger les patins de palier (13) et un deuxième élément (132) ayant la surface supportée (115a).

3. Unité de palier, comportant :
le dispositif de palier (10) selon la revendication 1 ou la revendication 2 ; et
un boîtier (20) ayant une surface de support (20a) destinée à supporter la surface supportée (15a, 115a, 215a, 315a) ; dans laquelle
de l'huile de lubrification est délivrée entre la surface supportée (15a, 115a, 215a, 315a) de la bague de support (15) et la surface de support (20a) du boîtier (20).

4. Unité de palier selon la revendication 3, dans lequel
l'huile de lubrification est délivrée par un embranchement à partir d'un mécanisme d'alimentation en huile de lubrification (40) destiné à délivrer de l'huile de lubrification aux patins de palier (13).

5. Unité de palier selon la revendication 3 qui est pourvue d'une pompe à haute pression (341) capable de délivrer de l'huile de lubrification à haute pression entre la surface supportée (315a) de la bague de support (315) et la surface de support (20a) du boîtier (20), dans laquelle
une rainure d'huile (345) par laquelle l'huile de lubrification à haute pression peut s'écouler est formée sur la surface supportée (315a).

6. Unité de palier selon la revendication 5, dans laquelle
la surface supportée (315a) est sous la forme d'une surface sphérique et
la rainure d'huile (345) est formée le long de la direction circonférentielle de façon à être sensiblement à égale distance du centre de l'arbre de rotation (3).

7. Unité de palier comportant :
le dispositif de palier (10) selon la revendication 1 ou la revendication 2 ;
un boîtier (20) ayant une surface de support (20a) destinée à supporter la surface supportée (15a) ; et
un roulement à billes (450) disposé entre la surface supportée (15a) de la bague de support (15) et la surface de support (20a) du boîtier (20).

8. Machine rotative, comportant :
l'unité de palier selon l'une quelconque des revendications 3 à 7 ;
un arbre de rotation (3) placé au niveau du centre d'arbre de l'unité de palier ; et
un collet de butée (12) qui est formé de façon à dépasser vers l'extérieur dans la direction radiale sur l'arbre de rotation (3), en limitant ainsi un mouvement dans une direction axiale de l'arbre de rotation (3).
